(19) **Europäisches Patentamt / European Patent Office / Office européen des brevets**

(11) **EP 4 502 408 B1**

(12) **EUROPEAN PATENT SPECIFICATION**

(45) Date of publication and mention of the grant of the patent:
**27.05.2026 Bulletin 2026/22**

(21) Application number: **23779487.0**

(22) Date of filing: **13.03.2023**

(51) International Patent Classification (IPC):
*F16C 19/06* (2006.01)    *F16C 33/41* (2006.01)
*F16C 41/04* (2006.01)

(52) Cooperative Patent Classification (CPC):
**F16C 33/416; F16C 33/32; F16C 33/418;**
**F16C 41/04;** F16C 19/06; F16C 2202/06;
F16C 2208/02; F16C 2240/44; F16C 2240/60;
F16C 2240/70

(86) International application number:
**PCT/JP2023/009524**

(87) International publication number:
**WO 2023/189465 (05.10.2023 Gazette 2023/40)**

(54) **CAGE AND DEEP GROOVE BALL BEARING**

KÄFIG UND RILLENKUGELLAGER

CAGE ET ROULEMENT À BILLES À RAINURE PROFONDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.03.2022 JP 2022051546**

(43) Date of publication of application:
**05.02.2025 Bulletin 2025/06**

(73) Proprietor: **NTN Corporation**
**Osaka-shi Osaka 530-0005 (JP)**

(72) Inventors:
• **WAKUDA, Takahiro**
  **Iwata-shi, Shizuoka 438-8510 (JP)**
• **MUNEYOSHI, Masaki**
  **Iwata-shi, Shizuoka 438-8510 (JP)**

• **HATA, Koyomi**
  **Iwata-shi, Shizuoka 438-8510 (JP)**
• **SAKAI, Kohei**
  **Iwata-shi, Shizuoka 438-8510 (JP)**

(74) Representative: **Grünecker Patent- und
Rechtsanwälte
PartG mbB
Leopoldstraße 4
80802 München (DE)**

(56) References cited:
WO-A1-2010/119835    GB-A- 2 243 416
JP-A- 2001 165 172    JP-A- 2008 128 448
JP-A- 2008 128 448    JP-A- 2008 202 781
JP-A- 2009 541 687    JP-A- 2016 148 393
JP-A- 2016 148 393    JP-A- 2017 053 229
JP-A- 2017 053 229    JP-A- H07 197 936
JP-A- H07 197 936    JP-U- H02 132 125

## Description

TECHNICAL FIELD

The present invention relates to a crown-shaped cage which is an integral cage with horns, and a deep groove ball bearing in which the cage is used.

BACKGROUND ART

In a rolling bearing such as a deep groove ball bearing which is disposed in a device that rotates at a high speed in an automobile, a machine tool or the like, an integral cage made of a synthetic resin and having self-lubricity is generally used as a cage rollably retaining rolling elements of the bearing.

However, in recent years, the number of vehicles such as electric vehicles (EV) and hybrid vehicles (HEV) that are each provided with an electric motor that rotates at a high speed has been increasing in the automotive field, and the use conditions of rolling bearings disposed therein have become even more severe. Therefore, if a synthetic resin cage, which is lower in rigidity than a metal cage, is used in such a rolling bearing, there is a growing concern that the cage lacks deformation resistance to centrifugal forces during high-speed rotation.

Especially with respect to a crown-shaped cage (integral cage with horns) used in a deep groove ball bearing, and made of a synthetic resin, when the cage is used under the condition of high-speed rotation, horn portions having a cantilevered structure tend to be deformed radially outward by a centrifugal force, so that inner peripheral portions of the distal ends of the deformed horn portions could come into contact with steel balls as rolling elements, thereby preventing their rolling; outer peripheral portions of the distal ends of the horn portions could interfere with the inner peripheral surface of an outer ring; and abnormal wear, cracks or the like could occur in the cage.

Therefore, if it is considered that such a problem may occur due to the use of a synthetic resin cage in a deep groove ball bearing, a cage is often used which is formed by integrating a metal reinforcement member with a synthetic resin by insert molding, and which is thus improved in deformation resistance to centrifugal forces (e.g., see the below-identified Patent Documents 1 and 2).

However, a cage in which a reinforcement member is embedded as described above has a problem in that the number of parts increases and productivity is low compared to a cage formed of only a resin material (or a synthetic resin to which a reinforcing material is added).

In contrast thereto, the below-identified Patent Document 3 proposes a crown-shaped cage made of only a resin material, and designed such that by partially removing the portions of the cage between respective circumferentially adjacent pairs of pockets (hereinafter also referred to as the "portions between the pockets") so as to reduce the axial wall thicknesses, the cage is reduced in weight, thereby reducing deformation of horn portions due to a centrifugal force and preventing the horn portions from coming into contact with or interfering with steel balls or an outer ring.

On the other hand, such a synthetic resin crown-shaped cage is normally designed such that since portions (generally referred to as "welds") where flows of molten resin meet in a mold during injection molding are lower in strength than other portions, welds are located between the pockets so as not to be located at the pocket bottoms, on which stress concentrates due to a centrifugal force. In the cage of Patent Document 3, the axial wall thicknesses of the portions between the pockets are set to 1/62 or more of a cage PCD (diameter of an imaginary circle circumferentially connecting the centers of the pockets) so that the portions between the pockets where welds are present are not broken by a centrifugal force. Other resin cages for ball bearings are known from GB 2 243 416 A, WO 2010/119835 A1 or JP 2001 165172 A.

PRIOR ART DOCUMENT(S)

PATENT DOCUMENT(S)

Patent Document 1: Japanese Unexamined Patent Application Publication No. 2011-117609
Patent Document 2: Japanese Unexamined Patent Application Publication No. 2007-263280
Patent Document 3: Japanese Unexamined Patent Application Publication No. 2016-169766

SUMMARY OF THE INVENTION

PROBLEMS TO BE SOLVED BY THE INVENTION

When a synthetic resin crown-shaped cage as described above is accidentally dropped during transportation, the steel balls on both sides of the lowest portion between the pockets move immediately toward each other, and press against the lowest portion between the pockets, so that this portion sometimes cracks and breaks by receiving an impact load.

In the cage of Patent Document 3, the axial wall thicknesses of the portions between the pockets are designed in view of the centrifugal force during high-speed rotation, and are not designed in view of the impact load that may be applied when the cage is dropped during transportation. Therefore, when the cage is dropped during transportation, the cage may not be necessarily prevented from cracking and breaking.

It is an object of the present invention to provide a synthetic resin crown-shaped cage for a deep groove ball bearing that can be effectively prevented from breaking when the cage is dropped during transportation.

MEANS FOR SOLVING THE PROBLEMS

In order to achieve the above object, the present invention provides a cage comprising: an annular portion; and a plurality of horn portions protruding from the annular portion toward one axial side, and circumferentially equidistantly spaced apart from each other, wherein the cage has pockets which are located between respective circumferentially adjacent pairs of the horn portions, and in which respective steel balls as rolling elements of a deep groove ball bearing are received, wherein each of the horn portions includes a base axially continuous with the annular portion; and a pair of claws protruding from the base toward the one axial side, wherein a steel ball diameter D of each of the steel balls is 13 to 18 mm, wherein a wall thickness of the cage from a bottom of each of the pockets to an end surface of the annular portion on the other axial side is 10 to 20% of the steel ball diameter D, wherein an axial length of each of the claws of the horn portions is 60 to 80% of the steel ball diameter D, and wherein the cage is entirely formed of a resin material, wherein when a tensile strength of the resin material is denoted by $\sigma$, a cross-sectional area A of a portion of the cage between each circumferentially adjacent pair of the pockets is set within a range of the following formula (1):

<Formula (1)>

$$A > (511D\text{-}4027)/\sigma$$

and wherein a gap Sa between an inner surface of each of the pockets and a corresponding one of the steel balls is 1 to 4% of the steel ball diameter D of the corresponding one of the steel balls.

In the present invention, the cross-sectional area A of the portion of the cage between each adjacent pair of pockets is set as described above due to the following reason:

First, when the cage is dropped during transportation, an impact load F (N) applied to the portion of the cage between pockets that is sandwiched between and pressed by two steel balls is obtained by the following formula (2) under the condition that the diameter of each steel ball (hereinafter also referred to as the "steel ball diameter") is D (mm), the mass of the steel ball m (kg), the height from which the cage falls is h (m), and the gap between the inner surface of each pocket and the steel ball (hereinafter also referred to as the "pocket gap") is Sa (m):

<Formula (2)>

$$F = 2 \times 2mgh/Sa$$

"g" in formula (2) is gravitational acceleration.
When substituting the mass of the steel ball

$m = 7.83 \times (4/3)\pi(D/2)^3$ in formula (2), the following formula (3) is obtained:

<Formula (3)>

$$F = 5.22 \times \pi ghD^3/Sa$$

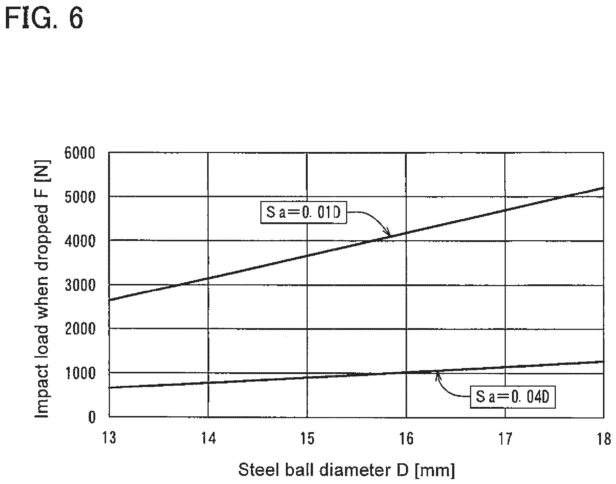

The pocket gap Sa is normally set to 1 to 4 % of the steel ball diameter D in the cage of the present invention, i.e., a crown-shaped cage which is entirely formed of a resin material, and in which the steel ball diameter D is 13 to 18 mm, the wall thickness of the cage from the bottom of each pocket to the end surface of the annular portion on the other axial side is 10 to 20% of the steel ball diameter D, and the axial length of each claw of each horn portion is 60 to 80% of the steel ball diameter D.
If the height h, from which the cage falls, is 1 m, in a case where the pocket gap Sa is 1 % of the steel ball diameter D, and a case where the pocket gap Sa is 4 % of the steel ball diameter D, the impact loads F calculated using formula (3) are shown in Fig. 6 as first-order approximations in the range where the steel ball diameter D is 13 to 18 mm. In Fig. 6, F equals 511D-4027 (F = 511D-4027) in the case where Sa is 1% of D, and F equals 127D-1007 (F = 127D-1007) in the case where Sa is 4% of D. The impact load F varies to a large degree depending on the pocket gap Sa, but is not larger than in the case where Sa is 1% of D.
In order to prevent breakage of the portion between pockets when the cage falls, the cage is designed such that the stress generated at the portion between pockets by the above impact load F is smaller than the tensile strength of the resin material forming the cage, i.e., such that when the tensile strength of the resin material is $\sigma$ (MPa) and the cross-sectional area of the portion between pockets is A (mm$^2$), the following formula (4) is satisfied:

<Formula (4)>

$$F/A < \sigma$$

Therefore, by substituting the approximate formula (511D-4027) in the case where the pocket gap Sa is 1% of the steel ball diameter D for the impact load F in the above formula (4), the cross-sectional area A of the portion between pockets for preventing breakage of the cage when dropped is obtained in the form of the above formula (1) regardless of the size of the pocket gap Sa.
In the above cage, the resin material can include carbon fiber as a reinforcing material, or include graphite as a reinforcing material. Also, the resin material can include a synthetic resin comprising an engineering plastic. Also, the resin material can be a material which does not include a reinforcing material, and of which the tensile strength is 85 Mpa or more.

If the resin material includes a reinforcing material, the reinforcing material added desirably accounts for 5 to 40% of the resin material, because if the reinforcing material added accounts for less than 5% of the resin material, a sufficient strength will not be obtained, and if the reinforcing material added accounts for more than 40% of the resin material, the entire resin material will be brittle.

The deep groove ball bearing of the present invention comprises the cage; an inner ring; an outer ring; and the steel balls, which are disposed between the inner ring and the outer ring, and even when the ball bearing is dropped, the cage does not break. Therefore, the ball bearing can be handled easily.

EFFECTS OF THE INVENTION

Since, as described above, in the crown-shaped cage of the present invention, the cross-sectional area of the portion of the cage between each adjacent pair of pockets is set such that the stress generated by an impact load assumed when the cage is dropped is smaller than the tensile strength of the resin material forming the cage, it is possible to effectively prevent breakage of the cage when dropped. Also, since, for the deep groove ball bearing in which the crown-shaped cage is used, the cage does not break when dropped, the ball bearing can be handled easily.

BRIEF DESCRIPTION OF THE DRAWINGS

Fig. 1 is a front sectional view of a deep groove ball bearing in which a cage according to an embodiment of the present invention is used.
Fig. 2 is a side view of the cage of Fig. 1 when seen from one axial side.
Fig. 3 is a sectional view taken along line III-III of Fig. 2.
Fig. 4 is a plan sectional view illustrating dimensions of respective portions of the cage of Fig. 1.
Fig. 5 is a sectional view taken along line V-V of Fig. 4.
Fig. 6 is a graph showing the relationship between a steel ball diameter and the impact load applied to the portion of the cage between adjacent pockets when the cage is dropped.

BEST MODE FOR CARRYING OUT THE INVENTION

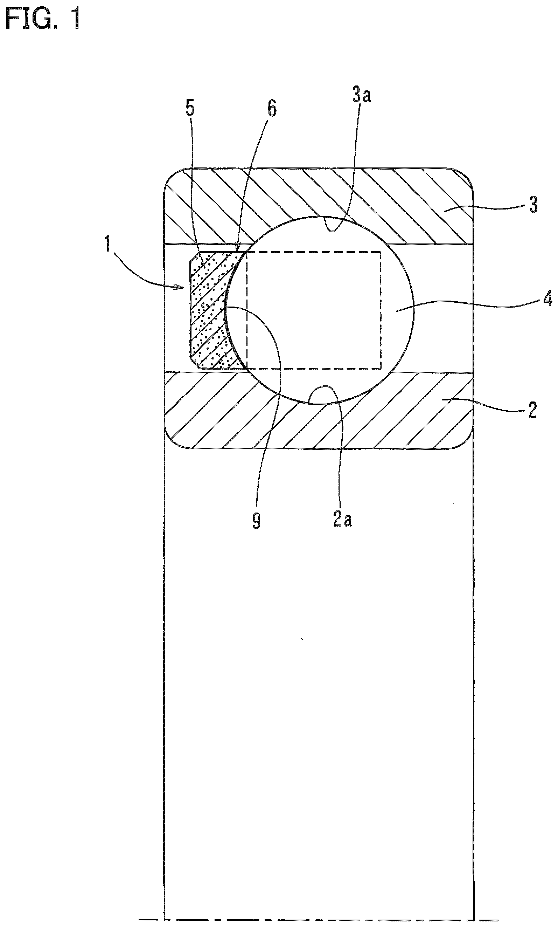

An embodiment of the present invention is now described with reference to the drawings. Fig. 1 illustrates a deep groove ball bearing in which a cage 1 of the embodiment is used. This deep groove ball bearing includes an inner ring 2 having a raceway surface 2a on its outer peripheral surface; an outer ring 3 having a raceway surface 3a on its inner peripheral surface; a plurality of steel balls (balls) 4 as rolling elements disposed between the raceway surface 2a of the inner ring 2 and the raceway surface 3a of the outer ring 3; and a cage 1 rollably retaining the steel balls 4 so as to be equidistantly spaced apart from each other.

The cage 1, the inner ring 2 and the outer ring 3 are arranged on a common center axis (not shown), and this common center axis corresponds to the rotation center axis of the deep groove ball bearing in design. The center axis of the cage 1 is hereinafter simply referred to as the "center axis".

As used herein, the terms "axial" and "axially" refer to two axially opposite directions along the center axis of which "one" corresponds to the rightward direction in Fig. 1, and "the other" corresponds to the leftward direction in Fig. 1. Also, the terms "radial" and "radially" refer to directions perpendicular to the center axis of which the term "radially outer (side)" refers to the directions radially away from the center axis, i.e., the upward direction in Fig. 1, and the term "radially inner (side)" refers to the directions radially toward the center axis, i.e., the downward direction in Fig. 1. Also, the terms "circumferential" and "circumferentially" refer to the direction around the center axis.

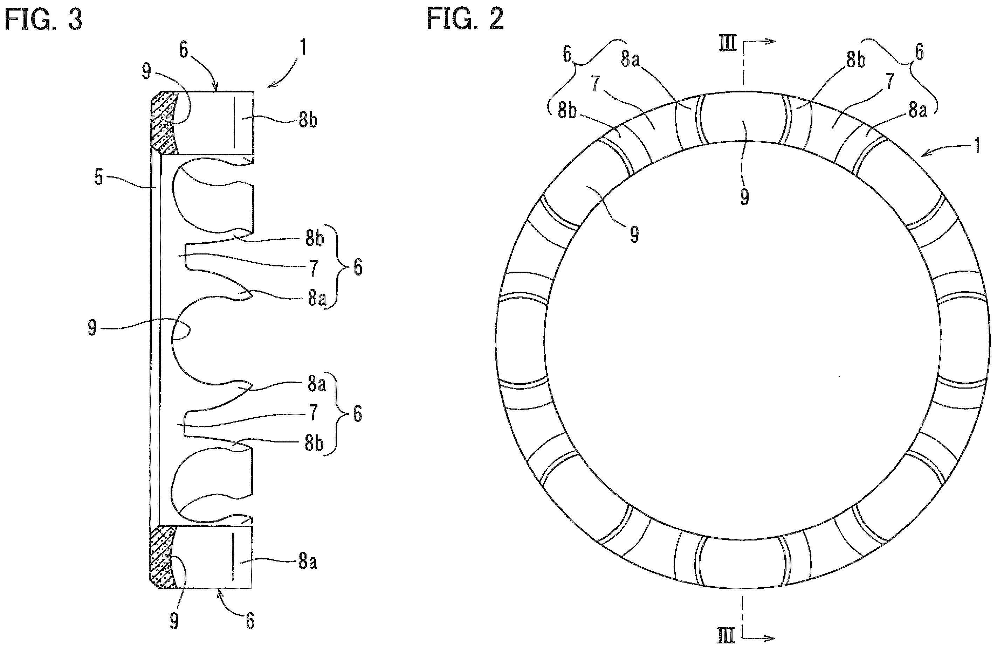

As illustrated in Figs. 1 to 5, the cage 1 is a crown-shaped cage (horn-shaped cage) comprising a circumferentially extending annular portion 5; and a plurality of horn portions 6 protruding from the annular portion 5 toward the one axial side, and circumferentially equidistantly spaced apart from each other. The annular portion 5 and the horn portions 6, i.e., the entire cage 1 is formed of a resin material.

The resin material forming the cage 1 includes, as its main component, an injection-moldable synthetic resin such as an engineering plastic. The resin material may include carbon fiber or graphite as a reinforcing material, or may be a natural material including no reinforcing material. If the resin material includes a reinforcing material, the reinforcing material added desirably accounts for 5 to 40% of the resin material. If the resin material is a natural material, the natural material desirably has a tensile strength of 85 Mpa or more.

The outer and inner peripheral surfaces of the annular portion 5 of the cage 1 are both cylindrical surfaces. The outer peripheral surfaces of the horn portions 6 are flush with the outer peripheral surface of the annular portion 5, and the inner peripheral surfaces of the horn portions 6 are flush with the inner peripheral surface of the annular portion 5.

Each horn portion 6 includes a base 7 axially continuous with the annular portion 5; and a pair of claws 8a and 8b protruding from the base 7 toward the one axial side. The bases 7 of the horn portions 6 are each continuous with the corresponding circumferentially adjacent bases 7. The pair of claws 8a and 8b of each horn portion 6 are located circumferentially away from each other, and protrude from the one axial side of the base 7 so as to have a cantilevered structure.

The spaces between the respective circumferentially adjacent pairs of horn portions 6 are pockets 9 each receiving a respective one of the steel balls 4. Each pocket 9 opens radially outward, radially inward and in the one axial direction. The number of the pockets 9 is the same as the number of the horn portions 6. An imaginary plane including the positions of the bottoms of the pockets 9 defines the boundary between the annular portion 5 and the bases 7 of the horn portions 6.

The inner surface of each pocket 9 is a spherical surface, and its radially inner and outer openings each has a diameter that does not allow the steel ball 4 to radially move out of the pocket 9. Also, the opening of each pocket 9 on the one axial side, i.e., the gap between the adjacent claws 8a and 8b (opposed to each other via the pocket 9) of each adjacent pair of horn portions 6 has a size that does not allow the steel ball 4 to axially move out of the pocket 9.

Therefore, when assembling the deep groove ball bearing, the steel balls 4a are stored into the respective pockets 9 as follows: With the steel balls 4 disposed between the raceway surface 2a of the inner ring 2 and the raceway surface 3a of the outer ring 3, by pushing the horn portions 6 of the cage 1 against the steel balls 4 from the other axial side, the claws 8a and 8b of the horn portions 6 are elastically deformed, and the openings of the pockets 9 on the one axial side are circumferentially widened, so that the steel balls 4 are received into the respective pockets 9.

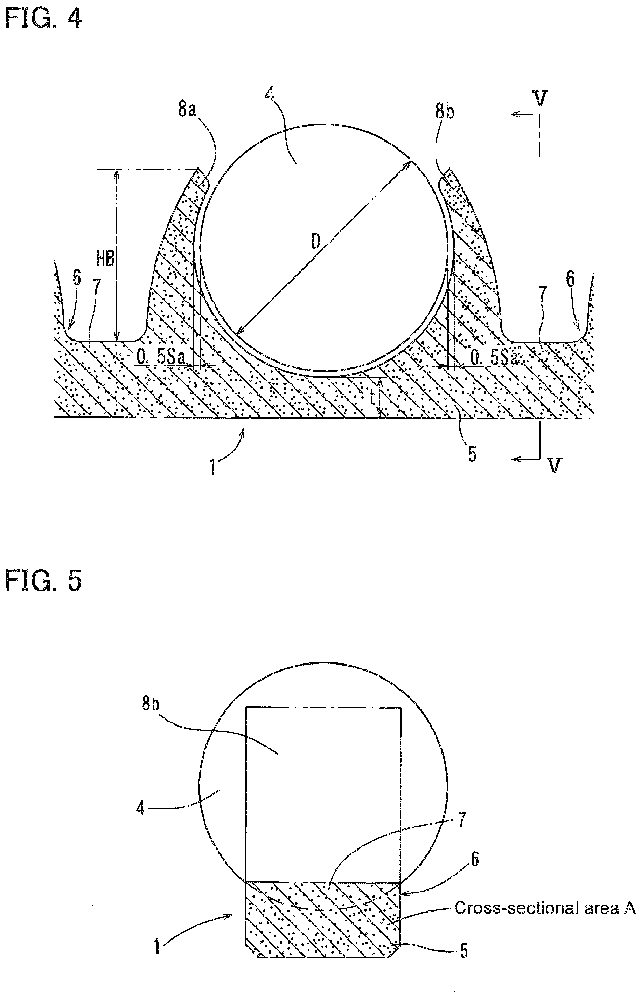

When, as illustrated in Fig. 4, the diameter (steel ball diameter) of each steel ball 4 is denoted by D, the wall thickness of the cage 1 from the bottom of each pocket 9 to the end surface of the annular portion 5 on the other axial side is denoted by t, the axial length of each claw 8a, 8b of each horn portion 6 is denoted by HB, and the gap (pocket gap) between the inner surface of each pocket 9 and the steel ball 4 is denoted by Sa, the steel ball diameter D is 13 to 18 mm, and the other dimensions are $t = \alpha D$ ($\alpha$ is 0.1 to 0.2), $HB = BD$ ($\beta$ is 0.6 to 0.8), and $Sa = yD$ (y is 0.01 to 0.04).

When a cross-sectional area shown in Fig. 5, i.e., the cross-sectional area of a portion (base 7 of each horn portion 6 and the annular portion 5) of the cage 1 between each adjacent pair of pockets is denoted by A, and the tensile strength of the resin material forming the entire cage 1 is denoted by $\sigma$, the cross-sectional area A is set within the range of the following formula (1):

$$<\text{Formula (1)}>$$

$$A > (511D\text{-}4027)/\sigma$$

With respect to the tensile strength $\sigma$ of the resin material, a result of a tensile test conducted using a dumbbell-shaped test piece in an absolute dry state is used.

As described above, the numerator of the above formula (1) on the right-hand side is the assumed maximum value of the impact load applied to the portion of the cage between each adjacent pair of pockets when the cage 1 is dropped from a height of 1 m. Therefore, if the cross-sectional area A of the portion of the cage 1 between each adjacent pair of pockets is set based on the above formula (1), the stress generated at the portion of the cage between each adjacent pair of pockets by the impact load when the cage is dropped is smaller than the tensile strength $\sigma$ of the resin material of the cage 1, and breakage of the cage 1 when dropped can be effectively prevented.

It is possible to easily handle the deep groove ball bearing in which the cage 1 of this embodiment is used, because there is no risk of breakage of the cage 1 even when dropped during transportation.

The above-described embodiment is a mere example in every respect, and the present invention is not limited thereto. The invention is defined by appended claims.

DESCRIPTION OF REFERENCE NUMERALS

    1: Cage
    2: Inner ring
    3: Outer ring
    4: Steel ball (rolling element, ball)
    5: Annular portion
    6: Horn portion
    7: Base
    8a, 8b: Claw
    9: Pocket

**Claims**

1.  A cage (1) comprising:

    an annular portion (5); and

        a plurality of horn portions (6) protruding from the annular portion (5) toward one axial side, and circumferentially equidistantly spaced apart from each other,
        wherein the cage (1) has pockets (9) which are located between respective circumferentially adjacent pairs of the horn portions (6), and in which respective steel balls (4) as rolling elements of a deep groove ball bearing are received,
        wherein each of the horn portions (6) includes a base (7) axially continuous with the annular portion (5); and a pair of claws (8a and 8b) protruding from the base (7) toward the one axial side,

    wherein the cage (1) is entirely formed of a resin material,

**characterised in that**
a steel ball diameter D of each of the steel balls (4) is 13 to 18 mm, wherein a wall thickness (t) of the cage (1) from a bottom of each of the pockets (9) to an end surface of the annular portion (5) on the other axial side is 10 to 20% of the steel ball diameter D,
wherein an axial length (HB) of each of the claws (8a, 8b) of the horn portions (6) is 60 to 80% of the steel ball diameter D,
wherein when a tensile strength of the resin material is denoted by σ, a cross-sectional area A of a portion of the cage (1) between each circumferentially adjacent pair of the pockets (9) is set within a range of the following formula (1):

<Formula (1)>

$$A > (511D - 4027)/\sigma$$

and
wherein a gap Sa between an inner surface of each of the pockets (9) and a corresponding one of the steel balls (4) is 1 to 4% of the steel ball diameter D of the corresponding one of the steel balls (4).

2. The cage (1) according to claim 1, wherein the resin material includes carbon fiber as a reinforcing material.

3. The cage (1) according to claim 1, wherein the resin material includes graphite as a reinforcing material.

4. The cage (1) according to any one of claims 1 to 3, wherein the resin material includes a synthetic resin comprising an engineering plastic.

5. The cage (1) according to claim 1, wherein the resin material does not include a reinforcing material, and the tensile strength is 85 Mpa or more.

6. The cage (1) according to claim 2 or 3, wherein the reinforcing material is added to the resin material so as to account for 5 to 40% of the resin material.

7. A deep groove ball bearing comprising:

the cage (1) according to any one of claims 1 to 6;
an inner ring (2);
an outer ring (3); and
the steel balls (4), which are disposed between the inner ring (2) and the outer ring (3).

**Patentansprüche**

1. Käfig (1), umfassend:

einen ringförmigen Abschnitt (5); und
eine Vielzahl von Hornabschnitten (6), die von dem ringförmigen Abschnitt (5) in Richtung einer axialen Seite vorstehen und in Umfangsrichtung in gleichen Abständen voneinander angeordnet sind,
wobei der Käfig (1) Taschen (9) aufweist, die sich zwischen jeweils in Umfangsrichtung benachbarten Paaren der Hornabschnitte (6) befinden und in denen jeweils Stahlkugeln (4) als Wälzkörper eines Rillenkugellagers aufgenommen sind,
wobei jeder der Hornabschnitte (6) eine Basis (7), die axial an den ringförmigen Abschnitt (5) anschließt, sowie ein Paar von Klauen (8a und 8b) umfasst, die von der Basis (7) in Richtung der einen axialen Seite vorstehen,
wobei ein Stahlkugeldurchmesser D jeder der Stahlkugeln (4) 13 bis 18 mm beträgt,
wobei eine Wandstärke (t) des Käfigs (1) vom Boden jeder der Taschen (9) bis zu einer Endfläche des ringförmigen Abschnitts (5) auf der anderen axialen Seite 10 bis 20 % des Stahlkugeldurchmessers D beträgt,
wobei eine axiale Länge (HB) jeder der Klauen (8a, 8b) der Hornabschnitte (6) 60 bis 80 % des Stahlkugeldurchmessers D beträgt, und
wobei der Käfig (1) vollständig aus einem Harzmaterial gebildet ist,
**dadurch gekennzeichnet, dass**, wenn eine Zugfestigkeit des Harzmaterials mit σ bezeichnet wird, eine Querschnittsfläche A eines Abschnitts des Käfigs (1) zwischen jedem in Umfangsrichtung benachbarten Paar der Taschen (9) innerhalb eines Bereichs der folgenden Formel (1) festgelegt ist:

<Formel (1)>

$$A > (511D - 4027)/\sigma$$

wobei ein Spalt Sa zwischen einer Innenfläche jeder der Taschen (9) und einer entsprechenden der Stahlkugeln (4) 1 bis 4 % des Stahlkugeldurchmessers D der entsprechenden der Stahlkugeln (4) beträgt.

2. Der Käfig (1) nach Anspruch 1, wobei das Harzmaterial Kohlenstofffasern als Verstärkungsmaterial enthält.

3. Der Käfig (1) nach Anspruch 1, wobei das Harzmaterial Graphit als Verstärkungsmaterial enthält.

**4.** Der Käfig (1) nach einem der Ansprüche 1 bis 3, wobei das Harzmaterial ein synthetisches Harz enthält, das einen technischen Kunststoff umfasst.

**5.** Käfig (1) nach Anspruch 1, wobei das Harzmaterial kein Verstärkungsmaterial enthält und die Zugfestigkeit 85 MPa oder mehr beträgt.

**6.** Käfig (1) nach Anspruch 2 oder 3, wobei das Verstärkungsmaterial dem Harzmaterial so beigemischt ist, dass es 5 bis 40 % des Harzmaterials ausmacht.

**7.** Rillenkugellager, umfassend:

den Käfig (1) nach einem der Ansprüche 1 bis 6;
einen Innenring (2);
einen Außenring (3); und
die Stahlkugeln (4), die zwischen dem Innenring (2) und dem Außenring (3) angeordnet sind.

## Revendications

**1.** Cage (1) comprenant :

une portion annulaire (5) ; et
une pluralité de portions de corne (6) faisant saillie depuis la portion annulaire (5) vers un côté axial, et espacées circonférentiellement de façon équidistante les unes des autres,
dans laquelle la cage (1) possède des poches (9) qui sont situées entre des paires circonférentiellement adjacentes respectives des portions de corne (6), et dans lesquelles sont reçues des billes d'acier (4) respectives en tant qu'éléments roulants d'un roulement rigide à billes,
dans laquelle chacune des portions de corne (6) comporte une base (7) axialement continue avec la porion annulaire (5) ; et une paire de griffes (8a et 8b) faisant saillie depuis la base (7) vers ledit côté axial,
dans laquelle la cage (1) est entièrement formée d'un matériau de résine,
**caractérisée en ce que**
un diamètre de bille d'acier D de chacune des billes d'acier (4) est de 13 à 18 mm,
dans laquelle une épaisseur de paroi (t) de la cage (1) allant d'un fond de chacune des poches (9) jusqu'à une surface d'extrémité de la portion annulaire (5) sur l'autre côté axial est comprise entre 10 et 20 % du diamètre de bille d'acier D,
dans laquelle une longueur axiale (HB) de chacune des griffes (8a, 8b) des portions de corne (6) est comprise entre 60 et 80 % du diamètre de bille d'acier D,
dans laquelle
lorsqu'une résistance à la traction du matériau de résine est désignée par σ, une surface en coupe transversale A d'une portion de la cage (1) entre chaque paire circonférentiellement adjacente des poches (9) est établie dans une plage de la formule suivante (1) :

<Formule (1)>

$$A > (511D - 4027)/\sigma$$

et
dans laquelle un espace Sa entre une surface intérieure de chacune des poches (9) et une bille correspondante des billes d'acier (4) est compris entre 1 et 4 % du diamètre de bille d'acier D de la bille correspondante des billes d'acier (4).

**2.** Cage (1) selon la revendication 1, dans laquelle le matériau de résine comporte une fibre de carbone comme matériau de renfort.

**3.** Cage (1) selon la revendication 1, dans laquelle le matériau de résine comporte du graphite comme matériau de renfort.

**4.** Cage (1) selon l'une quelconque des revendications 1 à 3, dans laquelle le matériau de résine comporte une résine synthétique comprenant une matière plastique technique.

**5.** Cage (1) selon la revendication 1, dans laquelle le matériau de résine ne comporte pas de matériau de renfort, et la résistance à la traction est de 85 Mpa ou plus.

**6.** Cage (1) selon la revendication 2 ou 3, dans laquelle le matériau de renfort est ajouté au matériau de résine de manière à constituer de 5 à 40 % du matériau de résine.

**7.** Roulement rigide à billes comprenant :

la cage (1) selon l'une quelconque des revendications 1 à 6 ;
un bague intérieure (2) ;
un bague extérieure (3) ; et
les billes d'acier (4), qui sont disposées entre la bague intérieure (2) et la bague extérieure (3).

FIG. 1

FIG. 2

FIG. 3

FIG. 4

FIG. 5

FIG. 6

**EP 4 502 408 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2243416 A
- WO 2010119835 A1
- JP 2001165172 A
- JP 2011117609 A
- JP 2007263280 A
- JP 2016169766 A